# EUROPÄISCHE PATENTSCHRIFT

(11) **EP 2 594 003 B1**
(45) Veröffentlichungstag und Bekanntmachung des Hinweises auf die Patenterteilung: **12.09.2018**
(21) Anmeldenummer: 11757139.8
(22) Anmeldetag: 08.07.2011
(51) Int. Cl.: H02J 3/14

(54) **VERFAHREN ZUR PLANUNG UND/ODER STEUERUNG EINER ENERGIEABGABE AN EINEN VERBRAUCHER UND/ODER EINER ENERGIEEINSPEISUNG IN EIN ENERGIEVERTEILUNGSNETZ**
METHOD FOR PLANNING AND/OR CONTROLLING AN ENERGY OUTPUT TO A CONSUMER AND/OR AN ENERGY SUPPLY TO AN ENERGY DISTRIBUTION NETWORK
PROCÉDÉ DE PLANIFICATION ET/OU DE COMMANDE D'UNE DISTRIBUTION D'ÉNERGIE À UN CONSOMMATEUR ET/OU D'UNE INJECTION D'ÉNERGIE DANS UN RÉSEAU DE DISTRIBUTION D'ÉNERGIE

(30) Priorität: 16.07.2010 AT 12102010
(43) Veröffentlichungstag der Anmeldung: 22.05.2013
(73) Patentinhaber: ATB Automatisierungstechnik GmbH & Co KG, 4210 Gallneukirchen (AT)
(72) Erfinder: EDTMAIR, Joachim, A-4210 Gallneukirchen (AT); BERNHARD, Wolfgang, A-4210 Gallneukirchen (AT)
(74) Vertreter: Gibler & Poth Patentanwälte KG
(86) Internationale Anmeldenummer: PCT/AT2011/000296
(87) Internationale Veröffentlichungsnummer: WO 2012/006644

(56) Entgegenhaltungen:
- EP-A2- 1 184 951
- US-A1- 2006 155 423
- US-A1- 2010 179 704
- US-B1- 7 171 374

## Beschreibung

Die Erfindung betrifft ein Verfahren gemäß dem Oberbegriff des Patentanspruches 1.

Es ist bekannt bzw. durch Energieversorgungsunternehmen geplant, elektrische Verbraucher, welche bei einem Teilnehmer eines Energieversorgungsnetzes angeordnet und dort an dieses Energieversorgungsnetz angeschlossen sind, durch den Betreiber des Energieversorgungsnetzes zu schalten bzw. anzusteuern. Dabei ist etwa vorgesehen, dass ein gewisser Bedarf an elektrischer Energie innerhalb eines gewissen Zeitraums, dem Energieversorgungsunternehmen durch den Teilnehmer bzw. einen Benutzer gemeldet wird. Das Energieversorgungsunternehmen schaltet dann aufgrund der unterschiedlichen eingehenden diesbezüglichen Anfragen einer Vielzahl an Teilnehmern, die einzelnen Teilnehmer innerhalb des beantragten Zeitraums zu, um eine gute Auslastung eines bestehenden Versorgungsnetzes zu erzielen, und vor allem um Überbelastungen des Versorgungsnetzes zu vermeiden.

Nachteilig daran ist, dass durch die bidirektionale Kommunikation das Energieversorgungsunternehmen Einblick in die Privatsphäre des Teilnehmers erhält. Dies ist aus Gründen des Datenschutzes sowie des Schutzes der Privatsphäre problematisch. Aufgrund des gemeldeten Bedarfs kann auf das zu betreibende elektrische Gerät, etwa Warmwasserspeicher, Elektroauto, Gartenbewässerungssystem oder dergleichen, geschlossen werden. Dadurch kann weiters auf Lebensumstände des Teilnehmers geschlossen werden, etwa wie viele Bewohner ein entsprechender Haushalt umfasst, zu welchen Zeiten der Teilnehmer zu Hause ist bzw. nicht. Der Teilnehmer selbst hat keine Möglichkeit mehr nachfolgend über die Verwertung seiner Daten mitzubestimmen bzw. diese einzuschränken. Weiters kann der Zugriff Unbefugter auf diese Daten nicht ausgeschlossen werden. Der Teilnehmer ist weiters hinsichtlich der tatsächlichen Inbetriebnahme seiner Geräte auf das Energieversorgungsunternehmen angewiesen, und folglich nicht mehr "Herr im eigenen Haus".

Weiters nachteilig an der bekannten Praxis ist die geringe Flexibilität bei der Herausgabe von Tarifen und die geringe Möglichkeit der Planung eines Energieverbrauchs bzw. einer Netzbelastung, Neue Tarife werden, aufgrund der bislang bestehenden Verbindlichkeit des angekündigten Tarifs, nur sehr selten herausgegeben. So findet zwar in der Regel zwei mal Täglich der Wechsel von einem Hochpreistarif zu einem Niedrigpreistarif statt, bzw. umgekehrt, Aber es gibt keine kurzfristigen Tarife, welche aufgrund kurzzeitiger Engpässe, oder besonders guter Energieproduktion herausgegeben werden könnten. Insbesondere beim Einsatz sog. erneuerbarer Energien, welche oftmals auf bestimmte Umwelteinflüsse angewiesen sind, ist die Bekanntgabe eines speziellen Tarifs problematisch, da die oftmals die prognostizierten Liefermengen letztendlich umweltbedingt nicht lieferbar sind. Dadurch wird eine Planung der Netzauslastung, sowie eine Planung eines Energieverbrauches deutlich erschwert, bzw. an den realen Verhältnissen vorbei durchgeführt. Durch das Fehlen kurzfristig anwendbarer Tarife bzw. anderer informationen zur Steuerung der Netzauslastung bzw. des Verbraucherverhaltens, kann keine den realen Verhältnissen der Energieproduktion bzw. Netzbelastung gerecht werdende Planung erfolgen.

Die US 2010/179704 A1 beschreibt ein Verfahren zur Optimierung des Energieverbrauchs in Micronetzen, wobei von einem Energieverteiler Daten eines Energieversorgers empfangen werden. Dabei sind auch Vorhersagen hinsichtlich Umweltbedingungen und Risiken vorgesehen.

Aus der US 2006/155423 A1 ist ein automatisiertes Energiemanagementsystem bekannt, wobei ein System den Energieverbrauch anhand einzelner Daten, wie den jeweils aktuellen Kosten, einem geplanten Betrieb einer Anlage, dem üblichen Energieverbrauch eines Nutzers usw. plant und steuert.

Die EP 1 184 951 A2 offenbart ein System zur Steuerung der Energieversorgung elektrischer Verbraucher. Dabei übermitteln Verbraucher Anforderungen, etwa hinsichtlich dem Preis, der Leistung und der Zeitspanne, an eine Steuereinheit.

Die US 7 171 374 B1 beschreibt ein System zur Sammlung und Verteilung von Verbrauchsressourcen.

Aufgabe der Erfindung ist es daher ein Verfahren der eingangs genannten Art anzugeben, mit welchem die genannten Nachteile vermieden werden können, mit welchem eine gleichmäßige Netzauslastung sowie eine angebotsorientierte Verbrauchsplanung erzielt werden kann.

Erfindungsgemäß wird dies durch die Merkmale des Patentanspruches 1 erreicht. Dadurch besteht die Möglichkeit der flexibleren Planung der Tarife bzw. der Netzauslastung. Dabei wird nicht nur ein Tarif angeboten bzw. eine Netzauslastung prognostiziert, sondern die betreffenden Angaben, welche noch um zusätzliche Angaben ergänzt sein können, mit einem zusätzlichen Wahrscheinlichkeitswert bedacht, welcher Wahrscheinlichkeitswert angibt, mit welcher Wahrscheinlichkeit die Angaben eintreten. Durch wiederholte Aktualisierung der ersten Nachrichten, kann auch der Wahrscheinlichkeitswert stetig angepasst werden. Dadurch besteht etwa für den Verbraucher die Möglichkeit der längerfristigen Planung einer Energieabnahme, da abgeschätzt werden kann, ob der betreffende Tarif auch tatsächlich eintreten wird, etwa abhängig von den Wetterverhältnissen. Vor allem kann dadurch die mittelfristige Planung, im Bereich zwischen wenigen Stunden bis zu einigen Tagen, erheblich verbessert werden.

Dadurch besteht weiters die Möglichkeit für Energielieferanten häufiger und unterschiedliche Tarife anzubieten, da diese mit der Zeit bis zu deren Eintreten angepasst werden können. Verbraucherseitig ergibt sich dadurch vor allem der Vorteil den Bezug von Energie längerfristig und flexibel planen zu können. Insbesondere durch den Vergleich der sog. Tarif- bzw. Netzbelastungsprognosen unterschiedlicher Anbieter bzw. Energielieferanten, welche etwa auch eine hauseigene Fotovoltaikanlage umfassen kann, kann der eigene Energieverbrauch, dessen Zeitrahmen, sowie gegebenenfalls eine eigenständige Energieproduktion besser geplant werden.

Durch die gegenständlichen Maßnahmen ergibt sich eine für alle beteiligen vorteilhafte Situation: Der Betreiber des Energieverteilungsnetzes profitiert dabei von der besseren und vor allem ausgeglichenen Auslastung seines Verteilungsnetzes, wobei Lastspitzen vermindert werden; Der Teilnehmer bzw. Kunde sowie der Betreiber von der besseren Planungsmöglichkeit; Die Anbieter umweltabhängiger Energieproduktion von der effektiveren Ausnützbar- weil auch Planbarkeit der Energieproduktion; Die Allgemeinheit aufgrund der besseren Ausnutzbarkeit alternativer Energieproduktion, sowie die bessere Leitungsausnutzung. Dadurch kann die Belastung der Stromverteilungsnetze vermindert werden, sowie die Energiekosten bei den Verbrauchern gesenkt werden. Dadurch kann eine bessere Auslastung der Stromverteilungsnetze ermöglicht werden, und dadurch auf einen Ausbau der Stromverteilungsnetze verzichtet werden.

Aufgabe der Erfindung ist es daher ein Verfahren der eingangs genannten Art anzugeben, mit welchem die genannten Nachteile vermieden werden können, mit welchem eine gleichmäßige Netzauslastung unter Wahrung des Datenschutzes erzielt werden kann.

Dadurch kann eine gute bzw. gleichmäßige Netzauslastung bzw. Auslastung des Energieverteilungsnetzes erzielt werden, wobei gleichzeitig keinerlei Bedenken hinsichtlich des Schutzes der Privatsphäre der Teilnehmer bestehen, da keine Daten an das Energieversorgungsunternehmen übermittelt werden. Die benötigte Energiemenge wird dem Verbraucher in wenigstens einem Abschnitt zur Verfügung gestellt, zu welchem das Energieversorgungsunternehmen eine unkritische Netzauslastung avisierte. Sofern das Energieversorgungsunternehmen lediglich Tarifinformationen herausgibt, besteht die Möglichkeit der Planung, zu welchem Zeitpunkt der betreffende Verbraucher mit dem Energieverteilungsnetz verbunden wird, aufgrund eben dieser Tarifinformationen, wodurch die gleichen Wirkungen erzielt werden. Tarife werden in der Regel von den Energieversorgungsunternehmen im Hinblick auf die zu unterschiedlichen Zeiten unterschiedlichen Netzauslastungen gestaltet, sodass ein kostengünstiger Tarif in einem bestimmten Zeitraum eine geringe Netzauslastung, daher freie Kapazitäten, bedeutet. Dadurch bleibt die "Schalthoheit" weiters beim Teilnehmer, und wird nicht ans Energieversorgungsunternehmen abgegeben.

In der Regel schließt ein Verbraucher bzw. ein Teilnehmer eines Energieversorgungsnetzes einen Vertrag mit einem bestimmten Energieversorgungsunternehmen ab. Der Teilnehmer ist in der weiteren Folge an diesen Verbraucher gebunden, und ist nicht in der Lage auf Angebote anderer Energieversorgungsunternehmen zu reagieren bzw. diese anzunehmen. Dadurch hat der Teilnehmer bzw. Kunde jedoch keinen Einfluss auf die Preisgestaltung sowie die Art der angebotenen Energie. Ein Kunde ist derzeit nicht in der Lage, etwa gezielt Strom aus Windkraftanlagen zu beziehen, bzw. auf besonderes umweltschädigend hergestellten Strom zu verzichten. Es wird daher ein Verfahren angegeben, mit welchem die genannten Nachteile vermieden werden können, mit welchem eine Auswahlmöglichkeit hinsichtlich der zu beziehenden Energie durch den Teilnehmer erzielt werden kann.

Dadurch kann sichergestellt werden, dass ein Teilnehmer eines Energieverteilungsnetzwerkes - soweit verfügbar bzw. angeboten - mit derartiger Energie versorgt wird, welche den Ansprüchen des Teilnehmers, etwa hinsichtlich Kosten oder Umweltverträglichkeit, entsprechen. Dadurch besteht die Möglichkeit für den Teilnehmer bzw. Konsumenten durch die bewusste Vorgabe der Energiebezugsrichtlinien auf das Energieversorgungsunternehmen einzuwirken, da Teilnehmer etwa bereit sind für besonders ökologischnachhaltig produzierten Strom und/oder Wärme höhere Preise zu bezahlen als etwa für Strom aus einem Kernkraftwerk.

Die Unteransprüche betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine besonders bevorzugte Ausführungsform eines erfindungsgemäßen Systems mit einer ersten besonders bevorzugten Ausführungsform eines erfindungsgemäßen Schaltgeräts; und
Fig. 2 eine zweite besonders bevorzugte Ausführungsform eines erfindungsgemäßen Schaltgeräts.

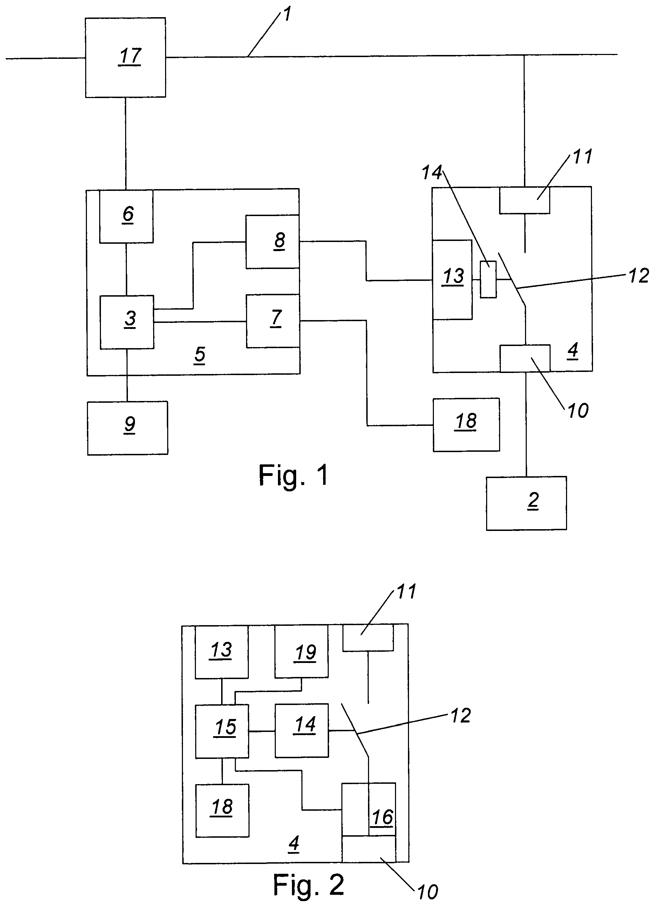

Die Fig. 1 zeigt eine besonders bevorzugte Ausführungsform eines erfindungsgemäßen Systems zur Steuerung einer Energieabgabe an wenigstens einen, an ein Energieverteilungsnetz 1 angeschlossenen Verbraucher 2, welches System eine Vorrichtung 5 zur Steuerung der Energieabgabe an wenigstens einen, an ein Energieverteilungsnetz 1 angeschlossenen Verbraucher 2 aufweist, welche Vorrichtung 5 wenigstens eine erste Kommunikationsschnittstelle 6 zum Empfang erster Nachrichten eines ersten Energieversorgungsunternehmens aufweist, eine zweite Kommunikationsschnittstelle 7 zum Empfang erster Bedarfsdaten des Verbrauchers 2, einer Steuerschnittstelle 8 zum wenigstens mittelbaren Schalten des Verbrauchers 2, und einer ersten Steuereinheit 3 zur Steuerung der Energieabgabe an den Verbraucher 2. Weiters weist das bevorzugte System gemäß Fig. 1 ein Schaltgerät 4 auf, welches zur vorgebbaren Inbetriebnahme eines, an das Schaltgerät 4 angeschlossenen Verbrauchers 2 geeignet bzw. ausgebildet ist, wobei das Schaltgerät 4 eine Stromentnahmeschnittstelle 10 und eine Stromaufnahmeschnittstelle 11 aufweist, sowie Schaltkontakte 12, welche in einer geschlossenen Stellung einen Strompfad zwischen der Stromentnahmeschnittstelle 10 und der Stromaufnahmeschnittstelle 11 schließen, wobei das Schaltgerät 4 weiters eine dritte Kommunikationsschnittstelle 13 zum Empfang eines Schaltauftrages aufweist, und einen Aktuator 14 zur Betätigung der Schaltkontakte 12.

Mittels eines derartigen Systems kann eine gute bzw. gleichmäßige Netzauslastung bzw. Auslastung des Energieverteilungsnetzes 1 erzielt werden, wobei gleichzeitig keinerlei Bedenken hinsichtlich des Schutzes der Privatsphäre der Teilnehmer bestehen. Dabei besteht die Möglichkeit, den Verbraucher 2 in Zeiten unkritischer Netzauslastung zu betreiben. Mittels eines derartigen Systems können weiters die Energiekosten eines Verbrauchers gesenkt werden, indem etwa bei mehreren verfügbaren Energieversorgungsunternehmen das jeweils günstigste ausgewählt wird.

Erfindungsgemäße Systeme sind bevorzugt zur Anwendung mit unterschiedlichen Energieversorgungsnetzen 1, daher Netzwerken zur Versorgung von Teilnehmern mit Energie bzw. Verteilung der Energie, vorgesehen, insbesondere für Netze zur Versorgung mit Energie in Form elektrischer Energie oder Wärmeenergie. Folglich handelt es sich bei den beiden besonders bevorzugten Arten von Energieversorgungsnetzen um elektrische Verteilungsnetze bzw. Fernwärmenetze, wobei in weiterer Folge eine besonders bevorzugte Ausgestaltung der gegenständlichen Erfindung anhand eines elektrischen Energieversorgungsnetzes 1 näher erläutert wird.

Eine Vorrichtung 5 zur Steuerung einer Energieabgabe an wenigstens einen, an ein Energieverteilungsnetz 1 angeschlossenen Verbraucher 2, weist wenigstens eine erste Kommunikationsschnittstelle 6 auf, welche zum Empfang erster Nachrichten eines ersten Energieversorgungsunternehmens vorgesehen und/oder ausgebildet ist. Die ersten Nachrichten sind bzw. umfassen bevorzugt Informationen hinsichtlich der Versorgung mit Energie, wie bevorzugt Daten hinsichtlich aktueller und/oder zukünftiger Tarife und/oder aktueller und/oder zukünftiger Netzauslastungen und/oder besonderer Angebote, wie etwa ein Paket elektrischer Energie innerhalb eines bestimmten Zeitrahmens (beispielsweise der Bezug von 5kWh innerhalb der nächsten zwei Stunden zu einem bestimmten Preis), und/oder hinsichtlich der Art der Energiegewinnung, insbesondere ob ein angebotener elektrischer Strom aus sog. erneuerbarer Energie, wie etwa Wasserkraft, Sonnenenergie oder Windkraft, oder durch Verbrennung fossiler oder nachwachsender Brennstoffe, oder etwa in einem Kernkraftwerk, erzeugt wurde bzw. wird. Die Informationen können auch eine lieferbare Energiemenge und/oder eine geplante lieferbare elektrische Leistung und/oder eine maximal verfügbare Leistung und/oder eine geplante lieferbare Stromstärke, umfassen.

Weiters enthalten die ersten Nachrichten wenigstens einen Wert für eine Wahrscheinlichkeit des Eintretens der betreffenden Tarife und/oder Netzauslastungen. Dabei kann sich die angegebene Wahrscheinlichkeitswert sowohl auf die Wahrscheinlichkeit der Netzbelastung, und/oder einer Wahrscheinlichkeit der Liefermenge, und/oder einer Wahrscheinlichkeit des Tarifs und/oder auch auf einen Streubereich des Tarifs beziehen. Weiters kann vorgesehen sein, dass sich der wenigstens eine Wahrscheinlichkeitswert auf die Angabe einer Menge an Energie bezieht, welche zu den genannten Konditionen bereitgestellt wird, bzw. deren Bereitstellung mit bestimmter Wahrscheinlichkeit geplant ist.

Die Angaben zu den ersten Nachrichten beziehen sich weiters auch auf die genannten zweiten und dritten Nachrichten.

Bevorzugt ist vorgesehen, dass metrologische Vorhersagedaten sowie statistische Netzbelastungsdaten ausgewertet werden, und auf Basis dieser Daten Tarife und/oder Netzbelastungen geplant werden, sowie ein Wert für die Wahrscheinlichkeit des Einhaltens der geplanten Tarife und/oder Netzbelastungen ermittelt wird.

In weiterer Folge werden teilweise die Begriffe Energielieferant bzw. Energieversorgungsunternehmen synonym verwendet. Dabei sind neben Energieversorgungsunternehmen auch Kleinkraftwerke, etwa Kleinwindkraftwerke, bzw. Fotovoltaikanlagen mit einbezogen.

Diese ersten Nachrichten werden von dem ersten Energielieferanten bzw. Energieversorgungsunternehmen bereitgestellt, und etwa über die Netzleitung bzw. über eine andere leitungsgebundene bzw. drahtlose Schnittstelle an den Stromzähler 17 übermittelt werden. Bevorzugt ist vorgesehen, dass die erste Kommunikationsschnittstelle 6 als drahtgebundene Schnittstelle, etwa Powerline, TCP/IP oder ähnliches, oder als Funkschnittstelle, etwa GSM, UMTS oder ähnliches ausgebildet ist, wobei auch Mischlösungen vorgesehen sein können, etwa eine Kombination aus einer drahtgebundenen Schnittstelle und einem WLAN-Modem. Besonders bevorzugt ist vorgesehen, dass die erste Kommunikationsschnittstelle 6 als unidirektionale Schnittstelle ausgebildet ist, und lediglich über einen Empfangsteil verfügt. Dadurch kann das Senden von Daten an das Energieversorgungsunternehmen dauerhaft und manipulationssicher verhindert werden. Zur Bestätigung der Annahme eines Tarifes kann aber auch eine bidirektionale Schnittstelle, welche eine duplexfähige Kommunikation ermöglicht vorgesehen sein.

Die Vorrichtung 5 weist eine erste Steuereinheit 3 auf, zur Steuerung der Energieabgabe an den Verbraucher 2. Weiters ist die erste Steuereinheit 3 bevorzugt dazu vorgesehen und ausgebildet, den Datenaustausch der Vorrichtung 5 mit weiteren Komponenten zu Regel bzw. zu Steuern, und gegebenenfalls anfallende Daten zu speichern, wozu die erste Steuereinheit 3 bevorzugt einen Speicher aufweist, bzw. mit einem solchen schaltungstechnisch verbunden ist.

Die erste Steuereinheit 3 ist bevorzugt als Mikrokontroller oder Mikroprozessor ausgebildet, wobei auch eine Ausbildung als diskret aufgebaute State-Machine vorgesehen sein kann.

Die Vorrichtung 5 weist weiters eine zweite Kommunikationsschnittstelle 7 zum Empfang erster Bedarfsdaten des Verbrauchers 2 auf. Die zweite Kommunikationsschnittstelle 7 ist zur Eingabe wenigstens eines Betriebsparameters wenigstens des Verbrauchers 2 vorgesehen und ausgebildet. Diese Schnittstelle kann in jeder beliebigen Form ausgebildet sein, welche es ermöglich, die entsprechenden Daten zu empfangen und an die erste Steuereinheit 3 weiterzuleiten. Gemäß einer besonders einfachen Ausführungsform einer Vorrichtung 5 ist vorgesehen, die zweite Kommunikationsschnittstelle 7 als vorgebbare Anzahl an Schaltern und/oder Tastern, insbesondere als, vorzugsweise alphanumerische, Tastatur auszubilden, welche unmittelbar an bzw. in der Vorrichtung 5 integriert ist.

Gemäß der in Fig. 1 dargestellten bevorzugten Ausführungsform ist vorgesehen, dass die zweite Kommunikationsschnittstelle 7 als leitungsgebundene Schnittstelle ausgebildet ist, an welche eine zweite Eingabeeinheit 18, vorzugsweise eine Tastatur, schaltungstechnisch angeschlossen ist. Dies hat den Vorteil, dass mehrere zweite Eingabeeinheiten 18 vorgesehen sein können, welche an die zweite Kommunikationsschnittstelle 7 angeschlossen sind, bzw. mit dieser in Verbindung stehen, und welche jeweils dort angeordnet werden können, wo dies aus operativen Gründen als vorteilhaft erachtet wird.

Die zweite Kommunikationsschnittstelle 7 ist bevorzugt als jede Art einer Draht-bzw. Funkschnittstelle ausgebildet, wobei insbesondere die Ausbildung als bidirektionale Schnittstelle vorgesehen ist, und/oder die Ausbildung als Busschnittstelle, etwa USB, Ethernet oder IEEE 1394, wodurch mehrere zweite Eingabeeinheiten 18 über die zweite Kommunikationsschnittstelle 7 angesteuert werden können. Weiters kann eine Ausbildung der zweiten Kommunikationsschnittstelle 7 als TCP/IP-Modem vorgesehen sein, nebst den hiefür notwendigen weiteren schaltungstechnischen Baugruppen.

Die Vorrichtung 5 weist weiters eine Steuerschnittstelle 8 auf, zum wenigstens mittelbaren Schalten des Verbrauchers 2. Gemäß einer besonders einfachen Ausführungsform ist vorgesehen, dass die Steuerschnittstelle 8 zwei elektrisch eindeutige Zustände, etwa Hi und Low, bereitstellt, wobei einer der Zustände ein Einschalten eines Verbrauchers 2 bedeutet, und der andere Zustand ein Abschalten des betreffenden Verbrauchers 2. Bevorzugt ist vorgesehen dass die Steuerschnittstelle 8 etwa zum Schalten eines Relais oder einer Halbleiterschaltung ausgebildet, bzw. in einer bevorzugten Weiterbildung einen Teil einer analogen bzw. digitalen Regelschaltung bildet. Bevorzugt ist vorgesehen, dass die Steuerschnittstelle 8 als Busschnittstelle, etwa als EIB, KNX, Powerline oder als Schnittstelle zur Ansteuerung von Funkaktuatoren, ausgebildet ist, wodurch mit einer Vorrichtung 5 mehrere Verbraucher 2 geschaltet werden können.

Eine besonders bevorzugte weitere Ausführungsform einer erfindungsgemäßen Vorrichtung weist wenigstens eine vierte Kommunikationsschnittstelle auf, zum Senden von Informationen wenigstens an das erste Energieversorgungsunternehmen und/oder ein zweites Energieversorgungsunternehmen. Dadurch kann ein Datenaustausch von der Vorrichtung 5 zu dem wenigstens einen ersten Energieversorgungsunternehmen erfolgen, und derart etwa statistische Daten übermittelt werden, oder, wie noch erläutert, ein Annahme eines angebotenen Tarifs bestätigt werden.

Fig. 1 zeigt u.a. ein Blockschaltbild einer bevorzugten Ausführungsform einer Vorrichtung 5, wobei die erste Kommunikationsschnittstelle 6 schaltungstechnisch mit der ersten Steuereinheit 3 verbunden ist, welche schaltungstechnisch sowohl mit der zweiten Kommunikationsschnittstelle 7, als auch der Steuerschnittstelle 8 verbunden ist. Die erste Kommunikationsschnittstelle 6 ist nachrichtentechnisch, daher mit einer Verbindung, welche eine Informationsübertragung ermöglicht, mit dem Stromzähler 17 verbunden. Die zweite Kommunikationsschnittstelle 7 ist ebenfalls im vorstehenden Sinn nachrichtentechnisch mit der zweiten Eingabeeinheit 18 verbunden.

Gemäß der dargestellten bevorzugten Ausführungsform ist weiters die erste Steuereinheit 3 mit der ersten Eingabeeinheit 9 verbunden.

Zusätzlich weist die Vorrichtung 5 bevorzugt ein Netzteil zur Energieversorgung auf. Weiters kann vorgesehen sein, dass an die erste Steuereinheit 3 weiters eine erste Eingabeeinheit 9, etwa eine Tastatur angeschlossen ist, wodurch allgemeine Konfigurationen der Vorrichtung 5 bzw. des gesamten Systems vereinfacht werden. Diesbezüglich kann vorgesehen sein, die erste und die zweite Eingebeeinheit 9, 18 einstückig auszubilden, bzw. weiters einen herkömmlichen PC an die erste Steuereinheit 3 anzuschließen.

Bevorzugt ist vorgesehen, dass die einzelnen Baugruppen der Vorrichtung 5 in einem Isolierstoffgehäuse angeordnet sind.

Fig. 1 zeigt weiters eine erste bevorzugte Ausführung eines erfindungsgemäßen Schaltgeräts 4 zur vorgebbaren Inbetriebnahme eines, an das Schaltgerät 4 angeschlossenen Verbrauchers 2, wobei das Schaltgerät 4 eine Stromentnahmeschnittstelle 10 und eine Stromaufnahmeschnittstelle 11 aufweist, sowie mit Schaltkontakten 12, welche in einer geschlossenen Stellung einen Strompfad zwischen der Stromentnahmeschnittstelle 10 und der Stromaufnahmeschnittstelle 11 schließen, wobei das Schaltgerät 4 weiters eine dritte Kommunikationsschnittstelle 13 zum Empfang eines Schaltauftrages aufweist, und einen Aktuator 14 zur Betätigung der Schaltkontakte 12. Mit einem derartigen Schaltgerät 4 ist die ferngesteuerte Inbetriebnahme eines, an dieses angeschlossenen Verbrauchers 2 möglich.

Ein erfindungsgemäßes Schaltgerät 4 weist einen Eingang in Form einer Stromaufnahmeschnittstelle 11, etwa in Form von Schraubklemmen, sowie einen Ausgang in Form einer Stromentnahmeschnittstelle 10, etwa in Form einer Steckdose, auf. Weiters weist das Schaltgerät 4 eine dritte Kommunikationsschnittstelle 13 auf, welche zur Kommunikation mit der Steuerschnittstelle 8 der Vorrichtung 5 vorgesehen ist, und entsprechend gegengleich ausgebildet ist.

Das Schaltgerät weist Schaltkontakte 12 auf, von welchen wenigstens einer beweglich ausgeführt. Die Schaltkontakte können geöffnet und geschlossen werden, wobei die Schaltkontakte 12 in deren geschlossenen Stellung einen Strompfad zwischen der Stromentnahmeschnittstelle 10 und der Stromaufnahmeschnittstelle 11 schließen. Es kann vorgesehen sein, dass das Schaltgerät 4 lediglich Schaltkontakte 12 zur Unterbrechung eines Strompfades aufweist, wobei jedoch besonders bevorzugt vorgesehen ist, dass für jeden Leiter, daher etwa für einen Neutralleiter und eine Phase, des Energieverteilungsnetzes 1 ein Paar Schaltkontakte 12 vorgesehen sind.

Das Schaltgerät 4 weist weiters einen Aktuator 14 auf, welcher einen elektrischen Eingangswert in eine mechanische Bewegung umwandelt. Bevorzugt ist vorgesehen, dass der Aktuator 14 als elektromechanische Vorrichtung, etwa als Hub- oder Zugelektromagnet, ausgebildet ist, wobei auch Aktuatoren unter Ausnützung des piezoelektrischen- oder magnetostriktiven-Effekts vorgesehen sein können.

Der Aktuator 14 weist ein mechanisch bewegliches Stellglied auf, welches mit dem wenigstens eine beweglichen Schaltkontakt 12 verbunden ist.

Die Schaltkontakte 12 sind mechanisch mit dem Aktuator 14 gekoppelt. Der Aktuator 14 ist weiters auf dessen elektrischer Eingangsseite schaltungstechnisch mit der dritten Kommunikationsschnittstelle 13 verbunden.

Es kann vorgesehen sein, dass weiters ein Schaltstellungssensor vorgesehen ist, welche etwas einstückig mit dem Aktuator 14 ausgebildet sein kann, und welcher bevorzugt ebenfalls schaltungstechnisch mit der dritten Kommunikationsschnittstelle 13 verbunden ist.

Weiters ist bevorzugt vorgesehen, dass das Schaltgerät 4 eine Spannungs- bzw. Stromversorgungseinheit aufweist, insbesondere ein Netzteil, und dass die dritte Kommunikationsschnittstelle 13 und der Aktuator 14 mit der Spannungs- bzw. Stromversorgungseinheit schaltungstechnisch verbunden ist.

Bevorzugt ist vorgesehen, dass die einzelnen Baugruppen des Schaltgeräts 4 in einem Isolierstoffgehäuse angeordnet sind.

Fig. 2 zeigt eine zweite bevorzugte Ausführungsform eines Schaltgeräts 4, welches zusätzlich zu den bereits dargelegten bevorzugten Ausführungsformen weitere Merkmale aufweist.

Bevorzugt ist vorgesehen, dass das Schaltgerät 4 eine zweite Steuereinheit 15 aufweist, welche schaltungstechnisch mit der dritten Kommunikationsschnittstelle 13 sowie dem Aktuator 14 verbunden ist, wodurch die Möglichkeit gegeben ist, neben reinen Schaltaufgaben weitere Aufgaben zu übernehmen. Die zweite Steuereinheit 15 ist bevorzugt als Mikrocontroller ausgebildet.

Insbesondere in diesem Zusammenhang, ist in Weiterbildung der Erfindung vorgesehen, dass das Schaltgerät 4 einen Speicher aufweist, zur Speicherung einer Identifizierungskennung, welcher Speicher schaltungstechnisch mit der dritten Kommunikationsschnittstelle 13 und/oder der zweiten Steuereinheit 15 verbunden ist. Dadurch besteht die Möglichkeit Befehle, Zustände und Messwerte abzuspeichern, und für eine spätere Auswertung bzw. einen weiteren Verfahrensablauf zur Verfügung zu wissen.

Gemäß der dargestellten zweiten bevorzugten Ausführungsform ist weiters vorgesehen, dass die zweite Eingabeeinheit 18 in dem Schaltgerät 4 angeordnet ist. Das Schaltgerät 4 weist weiters bevorzugt wenigstens einen ersten Sensor 16 zum Messen einer Strom- und/oder Leistungsabgabe über die Stromentnahmeschnittstelle 10 auf, wobei der erste Sensor 16 schaltungstechnisch mit der dritten Kommunikationsschnittstelle 13 und/oder der zweiten Steuereinheit 15 verbunden ist. Ein derartiger erster Sensor 16 ist bevorzugt zur Aufnahme eines zeitlichen Verlaufes der Strom- und/oder Leistungsabgabe ausgebildet, sowie zur Ausgabe eines Messsignals. Bevorzugt ist der erste Sensor 16 umfassend wenigstens einen Spannungsmesser, Shunt-Widerstand, Messwandler und/oder Förstersonde ausgebildet, wobei insbesondere zur Leistungsmessung eine Anordnung mehrerer einzelner Messegräte, etwa weiters eines zweiten und dritten Sensors, vorgesehen ist. Weiters kann vorgesehen sein, dass der erste Sensor 16 zur Messung der Spannung an der Stromentnahmeschnittstelle 10 vorgesehen ist, sowie Aufnahme, Speicherung und/oder Weiterleitung eines Spannungssignals an die Kommunikationsschnittstelle 13 und/oder die zweite Steuereinheit 15. Durch eine nachfolgende Analyse der durch den ersten Sensor 16 aufgenommenen Signale kann auf die Art des Verbrauchers 2 rückgeschlossen werden. Weiters können dadurch Diskrepanzen zwischen einem angezeigten Bedarf und dem tatsächlichen Bedarf erkannt, und bei wiederholtem Betrieb desselben Verbrauchers 2 berücksichtigt werden.

In Weiterbildung kann weiters vorgesehen sein, dass das Schaltgerät 4 zu einer Analyse eines zeitlichen Verlaufs der Strom- und/oder Leistungsabgabe über die Stromentnahmeschnittstelle 10 in einem Bildbereich und/oder einem Frequenzbereich ausgebildet ist. Dabei kann auch vorgesehen sein, dass alternativ hiezu die Vorrichtung 5 entsprechend ausgebildet ist. Das Schaltgerät und/oder die Vorrichtung weisen daher bevorzugt eine Transformationseinheit auf, bzw. ist eine solche in der ersten bzw. zweiten Steuereinheit 3, 15 implementiert, um eine Transformation des durch den ersten Sensor 16 aufgenommenen Messsignals vom Zeitbereich in einen Frequenzbereich bzw. einen Bildbereich, etwa bei Anwendung einer Wavelet- oder Gabortransformation, zu ermöglichen. Im Bild- bzw. Frequenzbereich sind weitere Möglichkeiten der Signalanalyse möglich.

Gemäß der dargestellten Ausführungsform in Fig. 2 ist weiters bevorzugt vorgesehen, dass das Schaltgerät 4 weiters eine Anzeige bzw. ein Display 19 aufweist, um Betriebszustände bzw. Eingaben anzuzeigen.

Es kann vorgesehen sein, die Vorrichtung 5 und das Schaltgerät 4 einstückig auszuführen, wobei in diesem Fall insbesondere auch die erste und die zweite Steuereinheit 3, 15 einstückig ausgebildet sind. Eine weitere Ausführungsform betrifft weiters ein Verfahren zur Steuerung einer Energieabgabe an wenigstens einen, an ein Energieverteilungsnetz 1 angeschlossenen Verbraucher 2, wobei erste Nachrichten eines Energieversorgungsunternehmens hinsichtlich aktueller und/oder zukünftiger Tarife und/oder Netzauslastungen von einer ersten Steuereinheit 3 empfangen werden, wobei der Verbraucher 2 an ein steuerbares Schaltgerät 4, insbesondere eine steuerbare Steckdose, angeschlossen wird, wobei der Energiebedarf des Verbrauchers 2 sowie ein Zeitrahmen zur Deckung dieses Energiebedarfs der ersten Steuereinheit 3 mitgeteilt wird, wobei die erste Steuereinheit 3 das Schaltgerät 4 innerhalb des vorgegebenen Zeitrahmens während wenigstens eines Zeitintervalls durchschaltet, in welchem wenigstens einen Zeitintervall der Energiebedarf des Verbrauchers 2 bei einer geringen erwarteten Netzauslastung und/oder einem günstigsten Tarif deckbar ist.

Dadurch kann eine gute bzw. gleichmäßige Netzauslastung bzw. Auslastung des Energieverteilungsnetzes 1 erzielt werden, wobei gleichzeitig keinerlei Bedenken hinsichtlich des Schutzes der Privatsphäre der Teilnehmer bestehen, da keine Daten an das Energieversorgungsunternehmen übermittelt werden. Die benötigte Energiemenge wird dem Verbraucher 2 in wenigstens einem Abschnitt zur Verfügung gestellt, zu welchem das Energieversorgungsunternehmen eine unkritische Netzauslastung avisierte. Sofern das Energieversorgungsunternehmen lediglich Tarifinformationen herausgibt, besteht die Möglichkeit der Planung, zu welchem Zeitpunkt der betreffende Verbraucher 2 mit dem Energieverteilungsnetz 1 verbunden wird, aufgrund eben dieser Tarifinformationen, wodurch die gleichen Wirkungen erzielt werden. Tarife werden in der Regel von den Energieversorgungsunternehmen im Hinblick auf die zu unterschiedlichen Zeiten unterschiedlichen Netzauslastungen gestaltet, sodass ein kostengünstiger Tarif in einem bestimmten Zeitraum eine geringe Netzauslastung, daher freie Kapazitäten, bedeutet. Dadurch bleibt die "Schalthoheit" weiters beim Teilnehmer, und wird nicht ans Energieversorgungsunternehmen abgegeben.

Bevorzugt ist vorgesehen, dass die Vorrichtung 5 - gemäß einer einfachen Ausführungsform - lediglich Informationen vom Energieversorgungsunternehmen bezieht, jedoch in der Regel keine Informationen an das Energieversorgungsunternehmen übermittelt. Dabei kann es vorgesehen sein, Daten doch an das Energieversorgungsunternehmen zu übermitteln, etwa Daten über die Energieabgabe und die Art des Verbrauchers 2 und/oder den individuellen Verbraucher 2. Bevorzugt ist diesbezüglich jedoch vorgesehen, dass lediglich anonymisierte Daten bzw. statistisch ausgewertete Daten, etwa über einen längeren Betrachtungszeitraum an das Energieversorgungsunternehmen übermittelt werden. Hiezu ist in Weiterbildung der Vorrichtung 5 bevorzugt vorgesehen, dass die Vorrichtung 5 eine vierte Kommunikationsschnittstelle aufweist, zum Senden von Informationen bzw. Daten an das erste Energieversorgungsunternehmen und/oder ein zweites Energieversorgungsunternehmen.

Durch das erfindungsgemäße Verfahren erfolgt eine Planung wenigstens eines Teils des anstehenden Energieverbrauches durch die Vorrichtung 5 dahingehend, dass bestimmte Vorgänge bewusst zu den Zeiten durchgeführt werden, zu denen das Energieversorgungsunternehmen mit einer geringen Netzauslastung rechnet, etwa in der Nacht, oder wenn in der Umgebung zusätzliche Energie bereit steht. Insbesondere ist das erfindungsgemäße Verfahren zum Betrieb sog. Elektrotankstellen vorgesehen, bei welchen für das Aufladen des Fahrzeuges ein längerer Zeitraum zur Verfügung steht, als rein für den Ladevorgang benötigt. Derzeit gibt es bereits Elektrofahrzeuge, welche innerhalb eines Zeitraumes von 1 bis 3 Stunden aufgeladen werden können. Wird ein derartiges Fahrzeug etwa abends zum Aufladen mit dem Stromnetz verbunden, erfolgt der Ladevorgang sofort, und damit in der Regel zu den Zeiten der ohnehin höchsten Netzbelastung. Durch die gegenständliche Erfindung wird der Vorrichtung 5 mitgeteilt welche Art von Verbraucher 2, etwa Elektrofahrzeug oder Waschmaschine, an das Schaltgerät 4 angeschlossen wurde, welchen Energie- bzw. Leistungs- bzw. Arbeitsbedarf diese Vorrichtung hat und innerhalb welchen Zeitrahmens dieser Bedarf anfällt. Daher bis zu welchem Zeitpunkt soll etwa das Elektrofahrzeug aufgeladen sein, bzw. die Waschmaschine mit dem Waschen fertig sein. Zusätzlich kann vorgesehen sein, etwa bei einem Anstecken des Elektrofahrzeuges in den stark belasteten Abendstunden, den restlichen in den Akkus des Elektrofahrzeuges gespeicherten Strom, ins Hausnetz zu liefern. Dies verringert die Gesamtnetzbelastung und hat den ökonomischen Vorteil, dass dadurch Strom zum abendlichen Spitzentarif eingespart werden kann, und stattdessen zu späteren Zeiten geringerer Netzbelastung und günstiger Tarife geladen wird. Das Elektrofahrzeug wird in diesem Fall lediglich als Energiespeicher benutz.

Die Vorrichtung 5 ermittelt aus den zur Verfügung stehenden Daten die Zeitpunkte, zu welchen die angeschlossenen Verbraucher 2 in Betrieb genommen werden, bzw. zu welchen Zeiten deren Energiebedarf gestillt werden soll, und veranlasst zu den ermittelten Zeiten das bzw. die Schaltgerät(e) 4 zum Schließen der Schaltkontakte 12.

Bevorzugt ist vorgesehen, dass die Vorrichtung 5 die Zeitpunkte zur Bereitstellung der Energie in einem iterativen Verfahren ermittelt, wobei jedoch bevorzugt kein linearer Optimierungsalgorithmus vorgesehen ist, da ein solcher einen sehr hohen Rechenaufwand bedingt, sondern ein entsprechend optimierter Algorithmus. Dabei ist weiters vorgesehen, sog. Soft-Decisions bzw. Fuzzy-Logik zu verwenden. Die Vorrichtung trifft dabei Entscheidungen aufgrund der verfügbaren Informationen, welche neben der Information auch mit einem Wahrscheinlichkeitswert versehen sind. Dadurch können deutlich bessere Ergebnisse erzielt werden, als bisher.

Dabei kann es vorgesehen sein, dass der Teilnehmer bzw. ein Benutzer der Vorrichtung 5 bekannt gibt, ob eine geringe Netzauslastung bzw. geringe Kosten Priorität haben, oder der Zeitpunkt, zu dem der Energiebedarf gedeckt sein muss. Dadurch kann die Vorrichtung 5 im Fall, dass keine zufriedenstellende und sämtlichen Eingangsparametern genügende Lösung gefunden werden kann, einen Kompromiss anstreben, welcher im Sinne des Benutzers liegt.

Nach Beendigung der Energieaufnahme durch den Verbraucher 2 oder nach Ablauf des Zeitrahmens wird das Schaltgerät 4 von der ersten Steuereinheit 3 abgeschaltet. Sollte es sich bei der Energieaufnahme um einen Ladevorgang handeln bzw. um einen programmgesteuerten Vorgang, wie etwa ein Waschprogramm, so beendet der Verbraucher 2 die Energieaufnahme von sich aus.

Sofern das Schaltgerät 4 einen ersten Sensor 16 aufweist, kann dies festgestellt werden, und folglich - etwa nach abwarten einer vorgegebenen Zeitspanne - das Schaltgerät 4 abgeschaltet werden.

Weiters kann vorgesehen sein, dass das Energieversorgungsunternehmen einen Notfallcode an die Vorrichtung 5 übermittelt, welche daraufhin die Schaltkontakte 12 sämtlicher angeschlossener Schaltgeräte 4 öffnet und sämtliche angeschlossenen Verbraucher 2 deaktiviert. Dies ist etwa im Fall eines Netzzusammenbruches vorteilhaft, da zum Wiederhochfahren des Netzes bzw. der daran angeschlossenen Kraftwerke, eine möglichst geringe Netzbelastung wichtig ist.

Zur Übermittlung des Energiebedarfs des Verbrauchers 2 an die erste Steuereinheit 3 ist - neben der manuellen Eingabe - insbesondere vorgesehen, dass der Energiebedarf des Verbrauchers 2 elektronisch an die erste Steuereinheit 3 übermittelt und gespeichert wird. Dadurch besteht vor allem die Möglichkeit einen zeitlichen Bedarfsverlauf des Verbrauchers zu berücksichtigen.

Einen solchen zeitlichen Verlauf, welcher für die Optimierung der Netzauslastung besonders vorteilhaft ist, da dadurch die Lastspitzen besonders gut abgefedert werden können, kann aber auch ermittelt werden, insbesondere wenn das selbe Gerät bzw. derselbe Verbraucher 2 wiederholt an der Vorrichtung 5 bzw. einem mit diesem assoziierten Schaltgerät 4 betrieben wird. Hiebei ist bevorzugt vorgesehen, dass ein zeitlicher Verlauf der Energieabgabe im Wesentlichen während der gesamten Energieabgabe bis zur Deckung des Energiebedarfs des Verbrauchers 2 gemessen und als Energieabgabedaten an die erste Steuereinheit 3 übermittelt werden. Dadurch stehen die genannten Möglichkeiten der besonders guten Netzauslastung auch bei Verbrauchern 2 zur Verfügung, zu welchen die entsprechenden Angaben nicht verfügbar sind.

In diesem Zusammenhang ist weiters vorgesehen, dass, aus einer Mehrzahl gespeicherter Energieabgabedaten zu einem bestimmten Verbraucher 2, der gespeicherte Energiebedarf dieses bestimmten Verbrauchers 2 in vorgebbaren zeitlichen Abständen durch die erste Steuereinheit 3 an die tatsächlich bisher erfolgte Energieabgabe angepasst wird. Durch eine derartige Anpassung kann eine weitere Optimierung erfolgen.

Bei einem Verfahren außerhalb der Erfindung ist es erforderlich der Vorrichtung 5 bekannt zugeben, welcher Verbraucher 2 bzw. welches Gerät an die Stromentnahmeschnittstelle des Schaltgeräts 4 angeschlossen ist. Hiezu kann vorgesehen sein, eine entsprechende Eingabe, etwa am ersten und/oder zweiten Eingabegerät, vorzunehmen. Weiters kann zur automatischen Erkennung des Verbrauchers vorgesehen sein, dass - nach Anschluss des Verbrauchers 2 an das Schaltgerät 4 - das Schaltgerät 4 für eine vorgebbare Zeitdauer durchgeschaltet wird, dass nachfolgend ein zeitlicher Verlauf der Energieabgabe ermittelt wird, und daraus wenigstens eine Art des angeschlossenen Verbrauchers 2 ermittelt wird. Sofern zu dem angeschlossenen Verbraucher 2 bereits der Energiebedarf sowie ein Zeitrahmen zur Deckung dieses Energiebedarfs gespeichert ist, und auch nicht geändert werden soll, stehen dadurch sämtliche erforderliche Parameter der Vorrichtung 5 zur Verfügung. Dadurch ist eine besonders anwenderfreundliche Umsetzung des erfindungsgemäßen Verfahrens möglich.

Hinsichtlich der Analyse der aufgenommenen - einen zeitlicher Verlauf der Energieabgabe repräsentierenden - Messsignale ist bevorzugt eine Transformation in den Frequenzbereich bzw. einen Bildbereich vorgesehen, wobei insbesondere die Anwendung einer FFT, DFFT, DCT, einer Wavelet- oder Gabortransformation, vorgesehen ist. Insbesondere ist in diesem Zusammenhang die Verarbeitung des wenigstens einen Messsignals als Digitalsignal vorteilhaft. Eine Ausführungsform betrifft weiters ein weiteres, in der weiteren Folge als zweites Verfahren bezeichnetes, Verfahren zur Steuerung der Energieversorgung wenigstens eines, an ein Energieverteilungsnetz 1 angeschlossenen Verbrauchers 2, wobei durch einen Benutzer an eine erste Steuereinheit 3 Energiebezugsrichtlinien übermittelt werden, wobei wenigstens eine erste Nachricht eines ersten Energieversorgungsunternehmens von der ersten Steuereinheit 3 empfangen wird, wobei wenigstens eine zweite Nachricht eines zweiten Energieversorgungsunternehmens von der ersten Steuereinheit 3 empfangen wird, wobei die erste Steuereinheit 3 aufgrund wenigstens der ersten und zweiten Nachricht das erste bzw. das zweite Energieversorgungsunternehmen jeweils auf das Erfüllen der Energiebezugsrichtlinien prüft, wobei aus dem ersten und dem zweiten Energieversorgungsunternehmen dasjenige Energieversorgungsunternehmen zur Energieversorgung des wenigstens einen Verbrauchers 2 ausgewählt wird, welches die Energiebezugsrichtlinien besser erfüllt, als das jeweils andere Energieversorgungsunternehmen.

Dadurch kann sichergestellt werden, dass ein Teilnehmer eines Energieverteilungsnetzes 1 - soweit verfügbar bzw. angeboten - mit derartiger Energie versorgt wird, welche den Ansprüchen des Teilnehmers, etwa hinsichtlich Kosten oder Umweltverträglichkeit, entsprechen. Dadurch besteht die Möglichkeit für den Teilnehmer bzw. Konsumenten durch die bewusste Vorgabe der Energiebezugsrichtlinien auf das Energieversorgungsunternehmen einzuwirken, da Teilnehmer etwa bereit sind für besonders ökologischnachhaltig produzierten Strom und/oder Wärme höhere Preise zu bezahlen als etwa für Strom aus einem Kernkraftwerk.

Neben einem erste und einem zweiten Energieversorgungsunternehmen kann jede weitere Mehrzahl an Energieversorgungsunternehmen vorgesehen sein, und mittels des erfindungsgemäßen Verfahrens bewertet werden.

Die erste sowie die zweite Nachricht sind bevorzugt entsprechend der vorstehend bereits beschriebenen ersten Nachricht ausgebildet.

Bei dem ersten und dem zweiten Energieversorgungsunternehmen handelt es sich ebenfalls bevorzugt um ein Energieversorgungsunternehmen zur Versorgung mit elektrischen und/oder thermischer Energie (Fernwärme).

Energiebezugsrichtlinien bezeichnen bevorzugt Vorgaben des Teilnehmers bzw. eines Benutzers hinsichtlich bestimmter Prioritäten, welche beim Bezug von Energie zu berücksichtigen sind, etwa ob die Energie zu möglichst geringen Kosten, möglichst geringer Netzbelastung, möglichst geringer Umweltbelastung, möglichst geringer CO₂-Belastung und/oder möglichst hohem Anteil an erneuerbarer Energie bezogen werden soll.

Nach Einlangen der ersten und zweiten Nachrichten werden diese daraufhin bewertet, welches der Energieversorgungsunternehmen den vorgegebenen Parametern am besten entspricht, und dieses ausgewählt. Hiezu kann in Weiterbildung der Erfindung vorgesehen sein, dass bei der Prüfung des ersten und des zweiten Energieversorgungsunternehmens wenigstens ein erster Wert für das Erfüllen der Energiebezugsrichtlinien durch das erste Energieversorgungsunternehmen ermittelt wird, sowie wenigstens ein zweiter Wert für das Erfüllen der Energiebezugsrichtlinien durch das zweite Energieversorgungsunternehmen ermittelt wird. Nachfolgend ist vorgesehen, dass der wenigstens eine erste Wert mit dem wenigstens einen zweiten Wert verglichen wird.

Alternativ bzw. in Weiterbildung hiezu kann vorgesehen sein, dass eine Bewertungsmatrix aufgestellt wird, wobei auch unterschiedliche Gewichtungen unterschiedlicher Parameter vorgesehen sein können, und diese Bewertungsmatrix ausgewertet wird.

Je nach Art der Energieversorgungsunternehmens kann vorgesehen sein, dass nach Auswahl des betreffenden Energieversorgungsunternehmens, ohne weitere Kommunikation mit diesem, die Energie wenigstens für einen bestimmten Zeitraum von diesem Energieversorgungsunternehmen bezogen wird, etwa wenn es sich bei dem betreffenden Energieversorgungsunternehmen um ein solches handelt, mit welchem der Teilnehmer ohnedies einen Liefervertrag aufweist, und dieser Liefervertrag den ausgewählten Tarif umfasst.

Es kann aber auch vorgesehen sein, etwa wenn es mit dem ausgewählten Energieversorgungsunternehmen keinen speziellen Vertrag gibt, dass dem ausgewählten Energieversorgungsunternehmen die Auswahl zur Energieversorgung des wenigstens einen Verbrauchers 2 mitgeteilt wird. Dadurch kauft der Teilnehmer Energie bzw. das Recht Energie in einem bestimmten Zeitraum zu bestimmten Konditionen beziehen zu dürfen. Nach Bezug der Energie über das Energieverteilungsnetz 1, an welches der Teilnehmer bzw. der Verbraucher angeschlossen ist, rechnet das Energieversorgungsunternehmen, welches im Besitz des betreffenden Energieverteilungsnetzes 1 ist die Kosten mit dem ausgewählten Energieversorgungsunternehmen ab.

Bevorzugt ist vorgesehen, dass das gegenständliche zweite Verfahren mittels einer Vorrichtung 5 bzw. einer, insbesondere in den Figuren, beschriebenen Anordnung ausgeführt wird. Dabei ist insbesondere weiters vorgesehen, dass eine erfindungsgemäße Vorrichtung 5 an einem mobilen Verbraucher 2, etwa einem Elektrofahrzeug, angeordnet ist. Dadurch kann etwa - ähnlich dem Rooming bei Mobiltelefonen - auch im Ausland Strom bezogen werden, und über ein Energieversorgungsunternehmen bezogen werden, welches bestimmte Kriterien erfüllt. Es ist vorgesehen, dass für die Planung und/oder Steuerung einer Energieabgabe an einen Verbraucher und/oder einer Energieeinspeisung in ein Energieverteilungsnetz 1 auch die Wahrscheinlichkeiten des Eintretens der betreffenden Tarife und/oder Netzauslastungen, erzeugt und versendet werden. Dabei ist bevorzugt vorgesehen, dass die betreffenden ersten Nachrichten von einer ersten Steuereinheit 3 empfangen werden.

Dadurch besteht die Möglichkeit der flexibleren Planung der Tarife bzw. der Netzauslastung. Dabei wird nicht nur ein Tarif angeboten bzw. eine Netzauslastung prognostiziert, sondern die betreffenden Angaben, welche noch um zusätzliche Angaben ergänzt sein können, mit einem zusätzlichen Wahrscheinlichkeitswert bedacht, welcher Wahrscheinlichkeitswert angibt, mit welcher Wahrscheinlichkeit die Angaben eintreten. Durch wiederholte Aktualisierung der ersten Nachrichten, kann auch der Wahrscheinlichkeitswert stetig angepasst werden. Dadurch besteht etwa für den Verbraucher die Möglichkeit der längerfristigen Planung einer Energieabnahme, da abgeschätzt werden kann, ob der betreffende Tarif auch tatsächlich eintreten wird, etwa abhängig von den Wetterverhältnissen. Dadurch besteht weiters die Möglichkeit für Energielieferanten häufiger und unterschiedliche Tarife anzubieten, da diese mit der zeit bis zu deren Eintreten angepasst werden können. Verbraucherseitig ergibt sich dadurch vor allem der Vorteil den Bezug von Energie längerfristig und flexibel planen zu können. Insbesondere durch den Vergleich der sog. Tarif- bzw. Netzbelastungsprognosen unterschiedlicher Anbieter bzw. Energielieferanten, welche etwa auch eine hauseigene Fotovoltaikanlage umfassen kann, kann der eigene Energieverbrauch, dessen Zeitrahmen, sowie gegebenenfalls eine eigenständige Energieproduktion besser geplant werden. Dadurch kann die Belastung der Stromverteilungsnetze vermindert werden, sowie die Energiekosten bei den Verbrauchern gesenkt werden. Dadurch kann eine bessere Auslastung der Stromverteilungsnetze ermöglicht werden, und dadurch auf einen Ausbau der Stromverteilungsnetze verzichtet werden.

In zahlreichen Anwendungsfällen werden mehrere Energielieferanten bereitstehen, um den anfallenden Energiebedarf zu decken. Dabei kann typischerweise vorgesehen sein, dass der erste Energielieferant und der Verbraucher innerhalb eines lokalen ersten Energieverteilungsnetzes, insbesondere innerhalb eines Haushalts, angeordnet sind. Ein zweite Energielieferant kann dabei etwa ein herkömmliches Energieversorgungsunternehmen sein, oder etwa ein Kleinkraftwerk eines Nachbarn. Die Energielieferanten erzeugen und versenden zweite Nachrichten hinsichtlich zu erwartender aktueller und/oder geplanter Tarife und/oder Netzauslastungen, sowie hinsichtlich einem Wert für eine Wahrscheinlichkeit des Eintretens der betreffenden Tarife und/oder Netzauslastungen. Es können selbstverständlich weitere Energielieferanten vorgesehen sein, welche ebenfalls entsprechende Nachrichten versenden.

Wie vorstehend bereits dargelegt, ist vorgesehen, dass der Energiebedarf eines, an ein steuerbares Schaltgerät angeschlossenen Verbrauchers 2 sowie ein Zeitrahmen zur Deckung dieses Energiebedarfs der ersten Steuereinheit 3 mitgeteilt wird. Die erste Steuereinheit 3 ermittelt nunmehr aufgrund der Informationen, welche in den ersten und/oder zweiten Nachrichten enthalten sind, einen Zeitplan für die Energieabgabe an den Verbraucher. Dabei ist vorgesehen, dass die erste Steuereinheit die Mittel der Fuzzy Logik anwendet. Nach Ermittlung eines Zeitplans ist weiters vorgesehen, das Schaltgerät 4 innerhalb des vorgegebenen Zeitrahmens gemäß dem ermittelten Zeitplan durchzuschalten.

Aufgrund der nunmehr verfügbaren Daten, kann die Planung etwa auf sich ändernde Wetterverhältnisse Rücksicht nehmen. Dabei kann weiters die Art der unterschiedlichen Verbraucher berücksichtigt werden, etwa kann bei unkritischen Verbrauchern ein größeres Versorgungsrisiko eingegangen werden, um dadurch einen besseren Preis zu erzielen. Dabei kann beispielsweise vereinbart sein, dass ein geringer Wert für die Wahrscheinlichkeit, dass eine angepriesene Energieliefermenge bzw. -leistung mit einem besonders günstigen Preis einhergeht, insbesondere wenn der Wahrscheinlichkeitswert so gering ist, dass mit einem Totalausfall gerechnet werden muss. So kann etwa auch bei besonders labilen Wetterverhältnissen, und etwas sich ständig ändernder Wahrscheinlichkeitswerte, eine sinnvolle und Bedarfsorientierte Netzplanung erfolgen.

Die Nachrichten erlauben aufgrund der Wahrscheinlichkeitswerte die öftere Herausgabe unterschiedlicher Tarife, sowie die bessere Planung des Energiemanagements, insbesondere im Bereich der Endverbraucher. Vor allem Energiebezieher, welche zusätzliche eigene Energielieferanten betreiben, gewinnen dadurch erheblich an Möglichkeiten der Planung und Steuerung, wodurch neben einer wirtschaftlichen Verbesserung vor allem eine Wirkung auf das Energieverteilungsnetz ausgeübt werden kann.

In Weiterbildung des gegenständlichen Verfahrens ist vorgesehen, dass - wenn eine geplante Energieliefermenge gemäß den ersten Nachrichten größer ist, als der Bedarf des Verbrauchers - eine dritte Nachricht, hinsichtlich der in einem geplanten Zeitrahmen verfügbaren Energiemenge, dem geplanten Tarif, sowie der Wahrscheinlichkeit für das Einhalten der Energiemenge und des Tarifs, erzeugt wird, und dass die dritte Nachricht innerhalb eines regionalen zweiten Energieverteilungsnetzes versendet wird. Dadurch kann bei einer Energieproduktion, welche die bereits zugesicherte oder erforderliche Abnahmemenge durch einen Verbraucher übersteigt, versucht werden, die betreffende überzählige Energiemenge im lokal benachbarten Gebiet abzusetzen. Durch die dritte Nachricht, welche ebenfalls einen Wahrscheinlichkeitswert enthält, kann ein potenzieller Abnehmer bereits frühzeitig die betreffende Energiemenge in seine Planung aufnehmen. Durch das Anbieten bzw. die Abnahme der Energie in der Umgebung der Erzeugung, kann die überregionale Netzbelastung reduziert werden.

Dabei kann etwa vorgesehen sein, dass die dritte Nachricht an Verbraucher im Gebiet des nächst übergeordneten Energieverteilers verteilt wird. Findet sich innerhalb einer vorgebbaren Zeit kein Abnehmer, kann die betreffende Nachricht eine Ebene höher verschickt werden, usw.

Beispielsweise können die Prognosen eines Haushalts mit einer Fotovoltaikanlage ergeben, dass - etwa aufgrund der hohen Sonneneinstrahlung - mehr Energie erzeugt wird, als zu diesem Zeitpunkt selbst verbraucht wird. Anstatt diese Energie nunmehr zu speichern, wird eine dritte Nachricht innerhalb einer bestimmten Umgebung um den Haushalt versendet, etwa innerhalb eines Straßenzuges, oder einer Ortschaft. Sofern es gelingt den erzeugten Strom innerhalb eines benachbarten Gebietes zu verwenden, kann dadurch Fernleitungskapazität eingespart werden.

Als Energielieferanten kann weiters auch eine jede Art des Energiespeichers angesehen werden. So kann etwa vorgesehen sein, elektrische Energie, welche in einem Elektrofahrzeug gespeichert ist, bei hohen Tarifen bzw. einer starken Netzauslastung ins Netz zu laden, und dass Elektrofahrzeug zu einer späteren Zeit, bei günstigeren Tarifen voll aufzuladen.

Aufgrund der Wahrscheinlichkeitswerte kann dies nunmehr besser geplant werden, als in der Vergangenheit.

Es kann vorgesehen sein, dass Teilschritte der vorgestellten Verfahren jeweils auf unterschiedlichen bzw. durch unterschiedliche Vorrichtungen durchgeführt werden.

## Patentansprüche

1. Verfahren zur Planung und/oder Steuerung einer Energieabgabe an einen Verbraucher (2) und/oder einer Energieeinspeisung in ein Energieverteilungsnetz (1),
wobei von einem ersten Energielieferanten erste Nachrichten hinsichtlich zu erwartender aktueller und/oder geplanter Tarife und/oder Netzauslastungen, sowie hinsichtlich einem Wert für eine Wahrscheinlichkeit des Eintretens der betreffenden Tarife und/oder Netzauslastungen, erzeugt und versendet werden, wobei von einem zweiten Energielieferanten zweite Nachrichten hinsichtlich zu erwartender aktueller und/oder geplanter Tarife und/oder Netzauslastungen, sowie hinsichtlich einem Wert für eine Wahrscheinlichkeit des Eintretens der betreffenden Tarife und/oder Netzauslastungen, erzeugt und versendet werden, wobei die ersten und zweiten Nachrichten von einer ersten Steuereinheit (3) empfangen werden,
wobei der Energiebedarf eines, an ein steuerbares Schaltgerät (4) angeschlossenen Verbrauchers (2) sowie ein Zeitrahmen zur Deckung dieses Energiebedarfs der ersten Steuereinheit (3) mitgeteilt wird, wobei die erste Steuereinheit (3) einen Zeitplan für die Energieabgabe an den Verbraucher (4) aufgrund der ersten Nachrichten und/oder der zweiten Nachrichten ermittelt, und das Schaltgerät (4) innerhalb des vorgegebenen Zeitrahmens gemäß dem ermittelten Zeitplan durchschaltet wird.

2. Verfahren nach Anspruch 1, **dadurch gekennzeichnet, dass** der erste Energielieferant und der Verbraucher (2) innerhalb eines lokalen ersten Energieverteilungsnetzes (1), insbesondere innerhalb eines Haushalts, angeordnet sind.

3. Verfahren nach Anspruch 1 oder 2, **dadurch gekennzeichnet, dass** metrologische Vorhersagedaten sowie statistische Netzbelastungsdaten ausgewertet werden, und auf Basis dieser Daten Tarife und/oder Netzbelastungen geplant werden, sowie ein Wert für die Wahrscheinlichkeit des Einhaltens der geplanten Tarife und/oder Netzbelastungen ermittelt wird.

4. Verfahren nach einem der Ansprüche 1 bis 3, **dadurch gekennzeichnet, dass** - wenn eine geplante Energieliefermenge gemäß den ersten Nachrichten größer dem Bedarf des Verbrauchers (2) ist - eine dritte Nachricht, hinsichtlich der in einem geplanten Zeitrahmen verfügbaren Energiemenge, dem geplanten Tarif, sowie der Wahrscheinlichkeit für das Einhalten der Energiemenge und des Tarifs, erzeugt wird, und dass die dritte Nachricht innerhalb eines regionalen zweiten Energieverteilungsnetzes versendet wird.

5. Verfahren nach Anspruch 4, **dadurch gekennzeichnet, dass** die ersten und/oder zweiten und/oder dritten Nachrichten Informationen ausgewählt aus der Gruppe: geplante lieferbare Energiemenge und/oder geplante lieferbare elektrische Leistung und/oder maximal verfügbare Leistung und/oder geplante lieferbare Stromstärke, umfassen.

6. Verfahren nach einem der Ansprüche 1 bis 5, **dadurch gekennzeichnet, dass** der Verbraucher (2) an das Energieverteilungsnetz (1) angeschlossenen ist, dass der erste Energielieferant ein Energieversorgungsunternehmen ist, und dass die erste Steuereinheit (3) das Schaltgerät (4) innerhalb des vorgegebenen Zeitrahmens während wenigstens eines Zeitintervalls durchschaltet, in welchem wenigstens einen Zeitintervall der Energiebedarf des Verbrauchers (2) bei einer geringen erwarteten Netzauslastung und/oder einem günstigsten Tarif deckbar ist.

7. Verfahren nach Anspruch 6, **dadurch gekennzeichnet, dass** - nach Anschluss des Verbrauchers (2) an das Schaltgerät (4) - das Schaltgerät (4) für eine vorgebbare Zeitdauer durchgeschaltet wird, dass nachfolgend ein zeitlicher Verlauf der Energieabgabe ermittelt wird, und daraus wenigstens eine Art des angeschlossenen Verbrauchers (2) ermittelt wird.

8. Verfahren nach Anspruch 7, **dadurch gekennzeichnet, dass** ein zeitlicher Verlauf der Energieabgabe im Wesentlichen während der gesamten Energieabgabe bis zur Deckung des Energiebedarfs des Verbrauchers (2) gemessen und als Energieabgabedaten an die erste Steuereinheit (3) übermittelt werden.

9. Verfahren nach Anspruch 8, **dadurch gekennzeichnet, dass**, aus einer Mehrzahl gespeicherter Energieabgabedaten zu einem bestimmten Verbraucher (2), der gespeicherte Energiebedarf dieses bestimmten Verbrauchers (2) in vorgebbaren zeitlichen Abständen durch die erste Steuereinheit (3) an die tatsächlich bisher erfolgte Energieabgabe angepasst wird.

## Claims

1. A method for planning and/or controlling an energy delivery to a consumer (2) and/or an energy feed into an energy distribution network (1),
wherein first messages with respect to expected present and/or planned rates and/or network utilizations, and also with respect to a value for probability of the occurrence of the relevant rates and/or network utilizations are created and sent by a first energy supplier,
wherein second messages with respect to expected present and/or planned rates and/or network utilizations, and also with respect to a value for a probability of the occurrence of the relevant rates and/or network utilizations are created and sent by a second energy supplier,
wherein the first and second messages are received by a first control unit (3),
wherein the energy demand of a consumer (2) connected to a controllable switching device (4) and a timeframe for covering this energy demand are communicated to the first control unit (3), wherein the first control unit (3) ascertains a time plan for the energy delivery to the consumer (4) on the basis of the first messages and/or the second messages, and the switching device (4) is interconnected within the predefined timeframe according to the ascertained time plan.

2. The method according to Claim 1, **characterized in that** the first energy supplier and the consumer (2) are arranged inside a local first energy distribution network (1), in particular inside a household.

3. The method according to Claim 1 or 2, **characterized in that** metrological prediction data and statistical network load data are analyzed, and rates and/or network loads are planned on the basis of these data, and also a value for the probability of maintaining the planned rates and/or network loads is ascertained.

4. The method according to any one of Claims 1 to 3, **characterized in that** - if a planned energy supply quantity according to the first messages is greater than the demand of the consumer (2) - a third message, with respect to the energy quantity available in a planned timeframe, the planned rate, and the probability of maintaining the energy quantity and the rate, is generated, and the third message is sent within a regional second energy distribution network.

5. The method according to Claim 4, **characterized in that** the first and/or second and/or third messages comprise items of information selected from the group: planned available energy quantity and/or planned available electrical power and/or maximum available power and/or planned available current strength.

6. The method according to any one of Claims 1 to 5, **characterized in that** the consumer (2) is connected to the energy distribution network (1), the first energy supplier is an energy supply company, and the first control unit (3) interconnects the switching device (4) within the predefined timeframe during at least one time interval, in which at least one time interval the energy demand of the consumer (2) can be covered in the event of a low expected network utilization and/or a most reasonable rate.

7. The method according to Claim 6, **characterized in that** - after connection of the consumer (2) to the switching device (4) - the switching device (4) is interconnected for a predefinable duration, subsequently a time curve of the energy delivery is ascertained, and at least one type of the connected consumer (2) is ascertained therefrom.

8. The method according to Claim 7, **characterized in that** a time curve of the energy delivery is measured essentially during the entire energy delivery until the energy demand of the consumer (2) is covered, and are transmitted as energy delivery data to the first control unit (3).

9. The method according to Claim 8, **characterized in that**, from a plurality of stored energy delivery data for a specific consumer (2), the stored energy demand of this specific consumer (2) is adapted at predefinable time intervals by the first control unit (3) to the energy delivery actually heretofore performed.

## Revendications

1. Procédé pour la planification et/ou le contrôle d'un transfert d'énergie vers un consommateur (2) et/ou d'une alimentation en énergie dans un réseau de distribution d'énergie (1),
dans lequel un premier fournisseur d'énergie génère et émet des premiers messages concernant les tarifs et/ou les charges du réseau actuels et/ou planifiés ainsi qu'une valeur de probabilité de la survenue des tarifs et/ou charges du réseau en question,
dans lequel un deuxième fournisseur d'énergie génère et émet des deuxièmes messages concernant les tarifs et/ou les charges du réseau actuels et/ou planifiés ainsi qu'une valeur de probabilité de la survenue des tarifs et/ou charges du réseau en question,
dans lequel les premiers et deuxièmes messages sont reçus par une première unité de contrôle (3),
dans lequel les besoins en énergie d'un consommateur (2) raccordé à un appareil de commutation contrôlable (4) et un créneau de temps pour la couverture des besoins en énergie sont communiqués à la première unité de contrôle (3), la première unité de contrôle (3) détermine une grille horaire pour le transfert d'énergie au consommateur (4) sur la base des premiers messages et/ou des deuxièmes messages et l'appareil de commutation (4) est commuté dans le créneau de temps prévu selon la grille horaire déterminée.

2. Procédé selon la revendication 1, **caractérisé en ce que** le premier fournisseur d'énergie et le consommateur (2) sont disposés dans un premier réseau de distribution d'énergie (1) local, en particulier à l'intérieur du ménage.

3. Procédé selon la revendication 1 ou 2, **caractérisé en ce que** des données de prévisions météorologiques ainsi que des données de charge du réseau statistiques sont analysées et des tarifs et/ou des charges du réseau sont planifiés sur la base de ces données, et une valeur de probabilité du respect des tarifs et/ou charges du réseau planifiés est également déterminée.

4. Procédé selon l'une des revendications 1 à 3, **caractérisé en ce que** lorsqu'une quantité d'énergie livrable planifiée selon les premiers messages excède les besoins du consommateur (2), un troisième message concernant la quantité d'énergie disponible dans un créneau de temps planifié, le tarif planifié et la probabilité de respect de la quantité d'énergie du tarif est généré, et **en ce que** le troisième message est émis dans un deuxième réseau de distribution d'énergie régional.

5. Procédé selon la revendication 4, **caractérisé en ce que** les premiers et/ou deuxièmes et/ou troisièmes messages contiennent des informations choisies parmi le groupe comprenant la quantité d'énergie livrable planifiée et/ou la puissance électrique livrable planifiée et/ou la puissance disponible maximale et/ou l'intensité de courant livrable planifiée.

6. Procédé selon l'une des revendications 1 à 5, **caractérisé en ce que** le consommateur (2) est raccordé au réseau de distribution d'énergie (1), **en ce que** le premier fournisseur d'énergie est une entreprise de fourniture d'énergie et **en ce que** la première unité de contrôle (3) commute l'appareil de commutation (4) dans le créneau de temps prédéterminé pendant au moins un intervalle de temps au cours duquel les besoins en énergie du consommateur (2) peuvent être couverts pendant une faible charge du réseau attendue et/ou au tarif le plus avantageux.

7. Procédé selon la revendication 6, **caractérisé en ce qu'**après le raccordement du consommateur (2) à l'appareil de commutation (4), l'appareil de commutation (4) est commuté pendant une durée pouvant être prédéterminée, **en ce qu'**une évolution dans le temps du transfert d'énergie est ensuite déterminée et au moins un type du consommateur (2) raccordé est déterminé sur cette base.

8. Procédé selon la revendication 7, **caractérisé en ce que** l'évolution dans le temps du transfert d'énergie est mesurée pour l'essentiel pendant tout le transfert d'énergie jusqu'à ce que les besoins en énergie du consommateur (2) soient couvert et transmise sous forme de données de transfert d'énergie à la première unité de contrôle (3).

9. Procédé selon la revendication 8, **caractérisé en ce qu'**à partir d'un grand nombre de données de transfert d'énergie vers un consommateur (2) donné enregistrées en mémoire, la première unité de contrôle (3) adapte les besoins en énergie de ce consommateur (2) donné au transfert d'énergie effectivement réalisé jusque là à des intervalles de temps pouvant être prédéterminés.
